# EUROPÄISCHE PATENTSCHRIFT

(11) **EP 2 462 202 B1**
(45) Veröffentlichungstag und Bekanntmachung des Hinweises auf die Patenterteilung: **18.03.2015**
(21) Anmeldenummer: 10740617.5
(22) Anmeldetag: 03.08.2010
(51) Int. Cl.: C09J 163/00, H02K 15/03

(54) **VERFAHREN ZUM BEFESTIGEN EINES MAGNETEN AUF ODER IN EINEM ROTOR ODER STATOR**
METHOD FOR ATTACHING A MAGNET ON OR IN A ROTOR OR STATOR
PROCÉDÉ DE FIXATION D'UN AIMANT SUR UN ROTOR OU UN STATOR

(30) Priorität: 03.08.2009 DE 102009028180
(43) Veröffentlichungstag der Anmeldung: 13.06.2012
(73) Patentinhaber: Henkel AG & Co. KGaA, 40589 Düsseldorf (DE)
(72) Erfinder: BILCAI, Eugen, 85764 Oberschleißheim (DE); HASLBERGER, Stefan, 85399 Halbergmoos (DE); BARRIAU, Emilie, Laguna Niguel, CA 92677 (US)
(86) Internationale Anmeldenummer: PCT/EP2010/061278
(87) Internationale Veröffentlichungsnummer: WO 2011/015575

(56) Entgegenhaltungen:
- WO-A1-97/12009
- WO-A1-2007/025007
- WO-A1-2007/025007
- DE-A1- 1 613 312
- DE-A1-102007 033 214
- JP-A- 10 126 988

## Beschreibung

Die vorliegende Erfindung betrifft eine Verfahren zum Aufkleben von Magneten auf die Oberfläche eines Rotors oder Stators eines Elektromotors oder eines Generators beziehungsweise das Einkleben von Magneten in Schlitze (sogenannte "Langlöcher" oder auch "Taschen") im Rotor oder Stator. Die Magnete können flächig ausgebildet sein (d.h. sie haben die Form einer Platte mit einer Höhe, die maximal halb so groß ist wie die kürzeste Breite) Die Magnete können aber auch gewölbt/halbrund oder gar ringförmig sein. Eine oder mehrere Flächen werden mit einem speziellen Klebstoff vorbeschichtet, der bei Raumtemperatur nicht flüssig ist und der nicht ohne einen Aktivierungsschritt aushärtet. Die so mit Klebstoff vorbeschichteten Magnete können versandt und gelagert werden, ohne dass die Klebstoffschicht ihre Funktionsfähigkeit verliert. Der Klebstoff härtet erst nach einem Aktivierungsschritt aus, der unmittelbar vor oder nach dem Auf- beziehungsweise Einsetzen der Magnete ausgeführt wird. Alternativ kann auch eine Beschichtung der Fügepartner (zum Beispiel Welle für ringförmige Magnete, oder sogar Statorgehäuse) vorgesehen werden.

Beispielsweise offenbart das Dokument WO 97/12009 ein Klebeverfahren, womit unter anderem auch Magnete verklebt werden können.

Bei der Herstellung von Rotoren oder Statoren von Elektromotoren oder Generatoren werden in der Regel plättchenförmige Magnete auf die Oberfläche des Rotors oder Stators aufgeklebt oder in Schlitze ("Langlöcher") im Rotor oder Stator eingeklebt. Bisher werden hierfür flüssige Klebstoffe verwendet, die unmittelbar vor dem Auflegen der Magnete auf die Fläche des Rotors oder Stators auf die Magnete aufgebracht werden. Bei Magneten, die in Langlöcher gesteckt werden, wird der flüssige Klebstoff nach dem Fügen in den Klebespalt dosiert. Dies ist ein aufwendiger und mühsamer Prozessschritt.

Das Auftragen eines flüssigen Klebstoffs im Fertigungsbereich der Rotoren beziehungsweise Statoren hat den Nachteil, dass hierfür spezielle Applikationssysteme zur Verfügung gestellt werden müssen. Fehlfunktionen der Applikationssysteme können zu einer Verschmutzung von Arbeitsbereich und Werkstücken mit Klebstoff führen. Ein Hauptproblem ist die vollflächige Benetzung der Magnete mit flüssigen Klebstoff, speziell bei Langlöchern.
Ferner wurde im Stand der Technik bereits der Einsatz von bei Raumtemperatur festen Klebstoffen für diesen Anwendungszweck vorgeschlagen. Diese bei Raumtemperatur festen Klebstoffe konnten jedoch hinsichtlich der Haltbarkeit der erzielten Verklebung, deren thermischer Belastbarkeit, Kriechfestigkeit sowie Klebefestigkeit und der leichten Verabeitbarkeit noch nicht vollständig überzeugen.

Die vorliegende Erfindung schlägt eine Lösung dieser Probleme vor. So ist es beispielsweise durch das erfindungsgemäß Verfahren möglich, Kohäsionsbrüche innerhalb des Magneten auch bei großen Magneten und/oder hohen Anwendungstemperaturen (beispielsweise bei einem Einsatz oberhalb von 120°C oder sogar oberhalb von 150°C) zu vermeiden. Außerdem ermöglicht das erfindungsgemäße Verfahren eine großflächige Benetzung ohne Lufteinschlüsse und vermag auch durch die Kriechfestigkeit zu überzeugen.

Ein Gegenstand der vorliegenden Erfindung ist ein Verfahren zum Auf- oder Einkleben eines Magneten auf die Oberfläche oder in einen Schlitz eines Rotors oder Stators eines Elektromotors oder eines Generators, wobei man
i) die zu verklebende Fläche oder Flächen des Magneten mit einem Klebstoff vorbeschichtet, der bei 22 °C nicht flüssig ist und der nicht ohne einen Aktivierungsschritt aushärtet,
ii) gegebenenfalls den mit Klebstoff beschichteten Magneten zwischenlagert und/oder vom Ort der Beschichtung zum Ort des Auf- oder Einklebens transportiert,
iii) den Magneten mit der mit Klebstoff beschichteten Fläche auf die Oberfläche des Rotors oder Stators auflegt und fixiert oder den Magneten so in einen Schlitz des Rotors oder Stators einsetzt, dass mindestens eine mit Klebstoff beschichtete Fläche einer Innenwand des Schlitzes gegenüber liegt, und
iv) den Klebstoff durch Erwärmen oder durch energiereiche Strahlung aktiviert, so dass er aushärtet,
dadurch gekennzeichnet, dass man einen Klebstoff verwendet, enthaltend
a) mindestens ein reaktives Epoxid-Präpolymer,
b) mindestens einen latenten Härter für Epoxide sowie
c) ein oder mehrere Elastomere.

Erfindungsgemäß werden die Elastomere c) ausgewählt aus
A) Block-Copolymeren mit thermoplastischen Polymerblöcken ausgewählt aus solchen Block-Copolymeren, die einen ersten Polymerblock mit einer Glasübergangstemperatur von unterhalb 15°C und einen zweiten Polymerblock mit einer Glasübergangstemperatur von oberhalb 25°C enthalten, und
B) Block-Copolymeren und thermoplastischen Polyurethanen.

Durch die sehr effektive, nahezu vollständige Ausnutzung der zur Verfügung stehenden Klebefläche können Fügegeometrien sehr vereinfacht werden und dadurch äußerst preisgünstig die Fertigung der Komponenten und die anschließende Montage gestaltet werden. Fügegeometrien, die durch formschlüssige Hinterschneidung die Quer- und Zugkräfte übertragen (sehr bekannt ist die Schwalbenschwanzverbindung) können als reine stoffschlüssige Parallelstoßverbindung umkonstruiert werden. Die Kombination mit kraftschlüssigen Verbindungselementen (Schrauben) kann ebenfalls entfallen. Auch Fertigungstoleranzen oder Oberflächenrauheiten werden durch die Expansion eines Blähmitttelhaltigen Klebstoffes besser ausgeglichen.

Alternativ kann auch eine Beschichtung der Fügepartner (zum Beispiel Welle für ringförmige Magnete, oder sogar Statorgehäuse) vorgesehen werden. Daher liegt eine alternative Ausführungsform der vorliegenden Erfindung in einem Verfahren zum Auf- oder Einkleben eines Magneten auf die Oberfläche oder in einen Schlitz eines Rotors oder Stators eines Elektromotors oder eines Generators, wobei man
i) die zu verklebende Fläche oder Flächen des Rotors oder Stators mit einem Klebstoff vorbeschichtet, der bei 22 °C nicht flüssig ist und der nicht ohne einen Aktivierungsschritt aushärtet,
ii) gegebenenfalls den mit Klebstoff beschichteten Rotor oder Stator zwischenlagert und/oder vom Ort der Beschichtung zum Ort des Auf- oder Einklebens transportiert,
iii) den Magneten mit der mit Klebstoff beschichteten Fläche des Rotors oder Stators in Kontakt bringt und
iv) den Klebstoff durch Erwärmen oder durch energiereiche Strahlung aktiviert, so dass er aushärtet,
dadurch gekennzeichnet, dass man einen Klebstoff verwendet, enthaltend
a) mindestens ein reaktives Epoxid-Präpolymer,
b) mindestens einen latenten Härter für Epoxide sowie
c) ein oder mehrere Elastomere

Durch den Einsatz der speziellen Klebstoffe ist es nunmehr möglich, Verklebungen zu erzielen, die über einen weiten Temperaturbereich stabil bleiben und auch die Verklebung großer Magnete gestatten. Durch diese erzielten Vorteile ist es möglich, die nach dem erfindungsgemäßen Verfahren verklebten Magnete beispielsweise auch in Windenergieanlagen zu nutzen, die gegebenenfalls sogar stabil in den sogenannten Offshore-Windparks stabil betrieben werden können.

Im Rahmen dieser Erfindung werden unter "Magnete" Permanentmagnete, magnetisierte oder magnetisierbare Werkstoffe verstanden. Nach dem erfindungsgemäßen Verfahren können die Magnete auf die Innenflächen des Statorgehäuses, auf die Außenfläche des Rotors oder in Langlöcher in Rotor oder Stator auf- beziehungsweise eingeklebt werden. Anstelle des Begriffs "Langloch" wird im Weiteren der kürzere Begriff "Schlitz" gebraucht.

Dass der Klebstoff im Bereich der Raumtemperatur, also bei 22°C, nicht flüssig ist, bedeutet, dass er nicht unter Einfluss der Schwerkraft von der beschichteten Fläche abläuft. Er ist zumindest so weit fest, dass er nicht unter dem Gewicht des Magneten deformiert wird, wenn dieser mit der mit Klebstoff beschichteten Fläche auf eine Unterlage aufgelegt wird.

Durch das erfindungsgemäße Verfahren kann das Beschichten der Magneten mit dem Klebstoff räumlich und zeitlich von dem Auf- beziehungsweise Einkleben der Magnete auf die Oberfläche des Rotors oder Stators beziehungsweise dem Einsetzen der Magnete in Rotor oder Stator getrennt werden. Das Beschichten der Magnete mit dem Klebstoff kann also in einen entsprechend ausgerüsteten Spezialbetrieb oder zum Magneten-Hersteller verlagert werden. Der Klebstoff kann auf die Magnete extrudiert oder umspritzt werden. Weiterhin kann der Klebstoff in einer bevorzugten Ausführungsform als Klebefolie auf die Magnete kaschiert werden. Die beschichteten Magnete können dann zwischengelagert und/oder vom Ort der Beschichtung zum Ort des Auf- beziehungsweise Einklebens transportiert werden. In der Montage, wo die Magnete verbaut werden, findet kein Klebstoffauftrag statt. Der Umgang mit flüssigen Klebstoffen am Fertigungsort der Rotoren beziehungsweise Statoren entfällt. Benetzungsprobleme oder Verschmutzungen durch fehlerhaft aufgetragenen Klebstoff werden daher vermieden. Analoges gilt für die Vorbeschichtung von Rotor oder Stator mit dem Klebstoff.

Unter dem "Aktivieren" des Klebstoffs wird ein Vorgang verstanden, der das Aushärten des Klebstoffs durch eine chemische Reaktion von Klebstoffkomponenten untereinander auslöst. Dies kann eine Bestrahlung mit energiereicher Strahlung (beispielsweise Elektronenstrahlung, elektromagnetische Induktion, Ultraschall, Laser-, UV-Strahlung, sichtbares Licht) sein. Oder aber man erwärmt den Klebstoff auf eine Temperatur, bei der eine chemische Vernetzungsreaktion von Klebstoffkomponenten eintritt.

Vorzugsweise beschichtet man den Magneten beziehungsweise den Rotor oder Stator mit dem Klebstoff derart, dass die Schichtdicke des Klebstoffs vor dem Aushärten im Bereich von etwa 0,1 bis etwa 5 mm liegt.

Für die Schritte iii) und iv) sind folgende Abfolgen möglich:
1. Die Magnete werden bei Raumtemperatur gefügt, das Aushärten des Klebstoffs erfolgt im Ofen, unter Bestrahlung mit Infrarotstrahlung oder durch Aufheizen mit elektromagnetischer Induktion.
2. Beim Einbau der Magnete in Langlöcher kann das Substrat vor dem Fügen durch elektromagnetische Induktion sehr rasch aufgeheizt werden. Die Magnete können in das vorerwärmte Substrat eingesetzt werden und werden anschließend durch weitere Erwärmung, beispielsweise im Ofen, entausgehärtet.
3. Magnete mit selbsthaftender Klebstoffbeschichtung werden gefügt, unmittelbar vor der Wärmeaushärtung wird eine Vorrichtung zur Einstellung des Spaltmaßes eingesetzt und anschließend wird durch Erwärmen ausgehärtet.

Eine Ausführungsform des erfindungsgemäßen Verfahrens ist dadurch gekennzeichnet, dass man den Magneten auf die Oberfläche des Rotors oder Stators aufklebt und dass man zum Vorbeschichten des Magneten einen Klebstoff verwendet, der bei einer Temperatur im Bereich von 15 bis 50 °C haftklebrig ist.

Als "haftklebrig" werden erfindungsgemäß Klebstoffe bezeichnet, die so beschaffen sind, dass der auf die Oberfläche von Rotor oder Stator eingesetzte Magnet vor dem Aushärten des Klebstoffs nicht unter Einwirkung der Schwerkraft oder Kräfte in Folge der Montage-Handhabung verrutscht oder herunterfällt.

Eine getrennte Fixierung des Magneten vor dem Aushärten des Klebstoffs kann hierdurch entfallen. Wie man Klebstoffe haftklebrig ausstattet, ist dem Fachmann bekannt. Beispielsweise kann dies dadurch erfolgen, dass der Klebstoff Komponenten enthält, die im genannten Temperaturbereich flüssig sind, oder dass er so genannte "tackifyer" enthält, beispielsweise klebrigmachende Harze oder Wachse. Beispiele hierfür werden weiter unten im Zusammenhang mit möglichen Zusammensetzungen der Klebstoffe angegeben.

Sofern der Klebstoff im Bereich der Zimmertemperatur, also zwischen etwa 15 und etwa 25°C, haftklebrig ist, kann der Magnet durch Auflegen der klebstoffbeschichteten Seite auf die Oberfläche des Rotors beziehungsweise Stators auf dieser fixiert werden. In der alternativen Ausführungsform wird der unbeschichtete Magnet auf die vorbeschichtete Stelle von Rotor oder Stator aufgelegt. Ist der Klebstoff erst im Temperaturbereich oberhalb der Raumtemperatur, also etwa im Temperaturbereich zwischen 20 und 50°C haftklebrig, ist empfehlenswert, zumindest den Teil der Oberfläche von Rotor oder Stator, auf den der Magnet aufgesetzt werden soll, auf die entsprechende Temperatur vorzuerwärmen.

Eine weitere Ausführungsform des erfindungsgemäßen Verfahrens ist dadurch gekennzeichnet, dass man den Magneten in einen Schlitz des Rotors oder Stators einklebt und dass man zum Vorbeschichten des Magneten einen Klebstoff verwendet, der bei einer Temperatur im Bereich von 15 bis 50 °C nicht haftklebrig ist. In dieser Ausführungsform verwendet man also vorzugsweise einen nicht haftklebrigen Klebstoff, damit der Magnet leichter in die Schlitze von Rotor oder Stator eingesetzt werden kann und das Einsetzen nicht durch ein vorzeitiges Anhaften des Magneten an der Schlitzwand behindert wird.

In beiden Ausführungsformen kann es vorteilhaft sein, dass der Klebstoff vor beziehungsweise während dem Aushärten irreversibel expandiert. Dies ist insbesondere in derjenigen Ausführungsform vorteilhaft, bei der man die mit Klebstoff vorbeschichteten Magnete in Schlitze in Rotor oder Stator einkleben will. Aufgrund der irreversiblen Ausdehnung des Klebstoffs füllt sich der Schlitz zwischen Schlitzwand und Magnet vollständig mit dem Klebstoff aus. Daher ist es insbesondere für die letztgenannte Ausführungsform vorteilhaft, dass man einen Klebstoff verwendet, der sein Volumen nach dem Aktivierungsschritt, d. h. vor oder bei dem Aushärten, um mindestens 1 % (bestimmt bei 22 °C und bezogen auf das Volumen bei 22 °C vor dem Expandieren und Aushärten) irreversibel vergrößert.

Die Obergrenze der irreversiblen Ausdehnung kann beispielsweise bei 50 %, 100 % oder 200 %, jeweils bezogen auf das Volumen bei 22°C, liegen. Beispielsweise kann die Obergrenze des Ausdehnungsgrads bei 90 % liegen. Bekanntermaßen kann der Ausdehnungsgrad durch Art und Menge des Treibmittels eingestellt werden.

In einer Ausführungsform verwendet man einen Klebstoff, der durch Bestrahlen mit energiereicher Strahlung (wie vorstehend ausgeführt) aktiviert werden kann. In diesem Fall ist es vorzuziehen, dass man den Klebstoff durch Bestrahlen mit energiereicher Strahlung aktiviert, bevor man den mit Klebstoff beschichteten Magneten auf die Oberfläche des Rotors oder Stators aufbringt oder in einen Spalt des Rotors oder Stators einsetzt.

Weniger technischen Aufwand erfordert es jedoch, wenn man einen durch Erwärmen auf eine Temperatur im Bereich von 60 bis 200°C aktivierbaren Klebstoff verwendet und den Klebstoff nach dem Schritt iii) auf eine Temperatur im genannten Bereich erwärmt, so dass er aushärtet und gegebenenfalls vor oder bei dem Aushärten expandiert. Das Erwärmen kann beispielsweise dadurch erfolgen, dass man den kompletten Rotor beziehungsweise Stator in einen entsprechenden Wärmeofen einbringt. Alternativ kann man Rotor oder Stator im Bereich der auf- beziehungsweise eingesetzten Magnete lokal erwärmen, beispielsweise durch Bestrahlen mit Infrarotstrahlung, durch Anblasen mit heißer Luft oder durch elektromagnetische Induktion. Die Dauer des Erwärmens kann etwa zwischen 1 und 120 Minuten, vorzugsweise zwischen etwa 5 und etwa 45 Minuten liegen. Die Temperatur wählt man vorzugsweise im Bereich zwischen 100 und 180°C, insbesondere zwischen 100 und 180°C.

Sofern der Klebstoff ein Treibmittel enthält, wird er gleichzeitig mit dem Aushärten expandiert. Aufgrund der Volumenvergrößerung nach der Aktivierung ist es nicht erforderlich, dass der mit Klebstoff vorbeschichtete Magnet passgenau in den Schlitz eingesetzt wird. Vielmehr darf ein Luftspalt zwischen Klebstoff und Schlitzwand verbleiben, was das Einstecken des Magneten in den Schlitz erleichtert. Aufgrund der Volumenvergrößerung füllt der Klebstoff nach der Aktivierung diesen Luftspalt aus und verbindet hierdurch die beiden Fügeteile stoffschüssig. Durch die Expansion können nicht nur die Fertigungstoleranzen besser ausgeglichen werden, sondern es kann auch eine genaue Luftspalt-Einstellung stattfinden (und dadurch eine Verbesserung des Wirkungsgrades).

In diesem Fall enthält der Klebstoff ein physikalisch oder chemisch wirkendes Treibmittel, das bei der Aktivierung des Klebstoffs selbst aktiviert wird und das durch Gasbildung oder GasAusdehnung das Volumen des Klebstoffs (nach Aushärtung irreversibel) vergrößert.

Bei physikalisch wirkenden Treibmitteln ist die Volumenvergrößerung eine physikalische Folge des Erwärmens von mit Gas oder verdampfbarer Flüssigkeit gefüllten Mikrohohlkugeln. Bevorzugte physikalische Treibmittel sind beispielsweise expandierende Hohlkugeln. Besonders bevorzugt werden expandierbaren Kunststoffmikrohohlkugeln auf der Basis von Polyvinylidenchloridcopolymeren oder Acrylnitril/(Meth)acrylat-Copolymeren verwendet. Diese sind beispielsweise unter den Namen "Dualite" beziehungsweise "Expancel" von den Firmen Pierce & Stevens beziehungsweise Akzo Nobel im Handel erhältlich.

Der Einsatz von physikalischen Treibmitteln, insbesondere von expandierbaren Hohlkugeln, ist erfindungsgemäß besonders bevorzugt. Durch diese Ausführungsform ist es möglich, jedwede Porosität der Verklebung zu vermeiden und somit gasdichten Verklebungen zu ermöglichen. "Gasdicht" im Sinne der vorliegenden Erfindung ist eine Verklebung, wenn bei einer Prüfung mit 100%igem Helium und einem Prüfdifferenzdruck von 7bar eine Heliumleckrate von 2,5 x 10⁻⁶ mbar I s⁻¹ nicht überschritten wird.

Bei chemischen Treibmitteln wird durch eine chemische Reaktion ein Gas abgespalten, welches die Volumenvergrößerung des Klebstoffs bewirkt. Beispiele für die chemischen Treibmittel sind Azobisisobutyronitril, Azodicarbonamid, Di-Nitroso-pentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid.

Beispiele von Klebstoffen, die im Rahmen der vorliegenden Erfindung eingesetzt werden können, sind sogenannte "reaktive Schmelzklebstoffe". Diese sind in geschmolzenen Zustand streichfähig, so dass sie in diesem Zustand auf den Magneten aufgebracht werden können, ohne dass der Aushärtungs-Mechanismus aktiviert wird. Dieser erfordert vielmehr ein Erwärmen auf eine höher liegende Aktivierungstemperatur, bei der ein latenter Härter für eine rektionsfähige Bindemittel-Komponente (beispielsweise ein Präpolymer mit Epoxid- oder Isocyanat-Gruppen) aktiviert wird.

Beispielsweise ist ein reaktiver Schmelzklebstoff geeignet, der in EP 354 498 A2 näher beschrieben wird. Dieser enthält eine Harzkomponente, mindestens einen thermisch aktivierbaren latenten Härter für die Harzkomponente sowie ggf. Beschleuniger, Füllstoffe, Thixotropiehilfsmittel und weitere übliche Zusatzstoffe, wobei die Harzkomponente durch Umsetzung von einem beim Raumtemperatur festen Epoxidharz, einem bei Raumtemperatur flüssigen Epoxidharz und einem linearen Polyoxypropylen mit Amino-Endgruppen erhältlich ist. Die Epoxidharze werden in einer solchen Menge, bezogen auf das Polyoxypropylen mit Amino-Endgruppen, eingesetzt, dass ein Überschuss an Epoxidgruppen, bezogen auf die Aminogruppen, gewährleistet ist. Als latenter Härter ist beispielsweise Dicyandiamid geeignet. Für weitere Einzelheiten wird auf das genannte Dokument verwiesen. Speziellere Ausführungsformen für einen derartigen reaktiven Schmelzklebstoff sind in WO 93/00381 offenbart. Auch diese sind im Rahmen der vorliegenden Erfindung geeignet.

Weiterhin können Epoxidharz-Strukturklebstoffe eingesetzt werden, wie sie beispielsweise in WO 00/37554 näher beschrieben sind. Hierbei handelt es sich beispielsweise um Zusammensetzungen, die a) ein Copolymeres mit mindestens einer Glasübergangstemperatur von -30 °C oder niedriger und gegenüber Epoxiden reaktiven Gruppen oder ein Reaktionsprodukt dieses Copolymeren mit einem Polyepoxid, b) ein Reaktionsprodukt aus einem Polyurethan-Prepolymer und einem Polyphenol oder Aminophenol sowie c) mindestens ein Epoxidharz enthalten. Um diese Zusammensetzungen wärmehärtbar zu machen, enthalten sie zusätzlich einen latenten Härter aus der Gruppe Dicyandiamid, Guanamine, Guanidine, Aminoguanidine, feste aromatische Diamine und/oder Härtungsbeschleuniger. Zusätzlich können sie Weichmacher, Reaktivverdünner, Rheologie-Hilfsmittel, Füllstoffe, Netzmittel und/oder Alterungsschutzmittel und/oder Stabilisatoren enthalten. Für weitere Einzelheiten und konkrete Beispiele wird auf das genannte Dokument verwiesen.

Weiterhin können für das erfindungsgemäße Verfahren wärmehärtbare Schmelzklebstoffe auf Epoxidharz-Basis mit folgender Zusammensetzung eingesetzt werden (Mengenangaben in Gewichtsteilen):

| Rohstoff | Einsatzmenge (Gew.-Teile) |
|---|---|
| Epoxidharz | 450 |
| Mineralische Füllstoffe (Silicate und Carbonate) | 360 |
| Nitril-Polymerkautschuk | 100 |
| Härter / Beschleuniger (Dicyandiamid, Epoxidharz-Aminaddukt) | 30 |
| Expandierbare Mikroholkugeln auf Acrylatbasis | 25 |

Die vorstehend beispielhaft genannten thermisch aktivierbaren Klebstoffsysteme können mit oder ohne die weiter oben beschriebenen Treibmittel formuliert werden, je nach dem, ob man eine Volumenvergrößerung des Klebstoffs bei beziehungsweise nach der thermischen Aktivierung anstrebt oder nicht.

Weiterhin hat es sich für das erfindungsgemäße Verfahren als wesentlich erwiesen, wenn ein thermisch aktivierbaren Klebstoff, enthaltend
a) mindestens ein reaktives Epoxid-Präpolymer,
b) mindestens einen latenten Härter für Epoxide sowie
c) ein oder mehrere Elastomere
zum Einsatz kommt.

Die Epoxid-Präpolymere, im folgenden auch als "Epoxidharze" bezeichnet, können grundsätzlich gesättigte, ungesättigte, cyclische oder acyclische, aliphatische, alicyclische, aromatische oder heterocyclische Polyepoxidverbindungen sein.

Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadienmodifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat.

Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Präpolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere geeignete Epoxid-Präpolymere sind Polyglycidylether von Polyalkoholen oder Diaminen. Solche Polyglyzidylether leiten sich ab von Polyalkoholen, wie beispielsweise Ethylenglycol, Diethylenglycol, Triethylenglycol, 1,2-Propylenglycol, 1,4-Butylenglycol, Triethylenglycol, 1,5-Pentandiol, 1,6-Hexandiol oder Trimethylolpropan.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (zum Beispiel diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER⁻736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (zum Beispiel Krasol Produkte von Sartomer), Epoxidfunktionalität enthaltendes Siliconharz, flammhemmende Epoxidharze (zum Beispiel "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (zum Beispiel "DEN-431" und "DEN-438" der Dow Chemical Co.), sowie Resorcin-diglycidylether (zum Beispiel "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie zum Beispiel C8-C10-Alkyl-glycidylether (zum Beispiel "HELOXY Modifier 7" der Hexion Specialty Chemicals Inc.), C12-C14-Alkyl-glycidylether (zum Beispiel "HELOXY Modifier 8" der Hexion Specialty Chemicals Inc.), Butylglycidylether (zum Beispiel "HELOXY Modifier 61" der Hexion Specialty Chemicals Inc.), Cresylglycidylether (zum Beispiel "HELOXY Modifier 62" der Hexion Specialty Chemicals Inc.), p-tert.-Butylphenyl-glycidylether (zum Beispiel "HELOXY Modifier 65" der Hexion Specialty Chemicals Inc.), polyfunktionelle Glycidylether wie zum Beispiel Diglycidylether von 1,4-Butandiol (zum Beispiel "HELOXY Modifier 67" der Hexion Specialty Chemicals Inc.), Diglycidylether von Neopentylglycol (zum Beispiel "HELOXY Modifier 68" der Hexion Specialty Chemicals Inc.), Diglycidylether von Cyclohexandimethanol (zum Beispiel "HELOXY Modifier 107" der Hexion Specialty Chemicals Inc.), Trimethylolethan-triglycidilether (zum Beispiel "HELOXY Modifier 44" der Hexion Specialty Chemicals Inc.), Trimethylolpropan-triglycidylether (zum Beispiel "HELOXY Modifier 48" der Hexion Specialty Chemicals Inc.), Polyglycidylether eines aliphatischen Polyols (zum Beispiel "HELOXY Modifier 84" der Hexion Specialty Chemicals Inc.), Polyglycoldiepoxid (zum Beispiel "HELOXY Modifier 32" der Hexion Specialty Chemicals Inc.), Bisphenol F-Epoxide (zum Beispiel "EPN-1138" oder GY-281" der Huntsman Int. LLC), 9,9-Bis-4-(2,3-epoxypropoxy)-phenylfluorenon (zum Beispiel "Epon 1079" der Hexion Specialty Chemicals Inc.).

Weitere bevorzugte kommerziell erhältliche Verbindungen sind z. B. ausgewählt aus Araldite^{™} 6010, Araldit^{™} GY-281^{™}, Araldit^{™} ECN-1273, Araldit^{™} ECN-1280, Araldit^{™} MY-720, RD-2 von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epiclon^{™} N673 von DaiNipon Ink Chemistry oder Epicote^{™} 152 von Hexion Specialty Chemicals Inc.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.
Das Epoxid-Äquivalent geeigneter Polyepoxide kann zwischen 150 und 50000, vorzugsweise zwischen 170 und 5000, variieren. Beispielsweise ist ein Epoxidharz auf Basis Epichlorhydrin/Bisphenol-A geeignet, das ein Epoxid-Äquivalentgewicht von 475 bis 550 g/eq beziehungsweise einen Epoxidgruppen-Gehalt im Bereich von 1820 bis 2110 mmol/g aufweist. Der nach RPM 108-C bestimmte Erweichungspunkt liegt im Bereich von 75 bis 85°C.

Vorzugsweise liegt als Komponente a) mindestens ein bei 22 °C festes Epoxidharz mit reaktiven Epoxy-Gruppen vor. Für die Einstellung der Flexibilität kann es hilfreich sein, zusätzlich bei 22 °C flüssige oder pastenartige reaktive Epoxidharze vorzusehen.

Als Härter werden thermisch aktivierbare oder latente Härter für das Epoxidharz-Bindemit-telsystem eingesetzt. Diese können ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Bevorzugt ist Dicyandiamid geeignet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Ferner hat es sich erfindungsgemäß wesentlich erwiesen, wenn der eingesetzte Klebstoff mindestens ein Elastomer c) enthält. Durch diese Maßnahme ist es beispielsweise möglich, das erfindungsgemäße Verfahren auch zur Verklebung großer Magnete einzusetzen, die extremen Temperaturen (Anwendungsbereiche oberhalb von 120°C, teilweise sogar oberhalb von 150°C) ausgesetzt sind. Derartige Bedingungen sind beispielsweise im Bereich der Windenergieanlagen, insbesondere im Offshore-Bereich anzutreffen. Ferner wird es durch diese Maßnahme möglich, die Zahl der auftretenden Microrisse im Bereich der Verklebung zu verringern, wie sie beispielsweise bei Temperaturwechselbelastungen des Magneten zu beobachten sind. Auch wird durch den Einsatz der erfindungsgemäßen Komponente c) eine gleichmäßigere Benetzung der zu verklebenden Flächen gewährleistet, wodurch Lufteinschlüsse verhindert werden können. Auf diese Weise kann das Risiko einer Bondlinekorrosion weiter verringert werden.

Dabei hat es sich als besonders bevorzugt erwiesen, wenn die Komponente c) ausgewählt ist aus:
c1) thermoplastischen Polyurethanen
c2) thermoplastischen Isocyanaten und/oder
c3) Block-Copolymeren mit thermoplastischen Polymerblöcken.

Die Elastomer-Komponente c) kann ein thermoplastisches Polyurethan (c1) darstellen, das reaktiv oder nicht reaktiv sein kann. In einer bevorzugten Ausführungsform ist das thermoplastische Polyurethan nicht reaktiv in dem Sinne, dass es nicht weiter vernetzbar ist. Insbesondere kann es sich hierbei um ein Polyurethan handeln, das eine Polyester-Kette enthält.

Der Begriff "thermoplastisches Polyurethan", häufig abgekürzt als "TPU", ist dem Fachmann auf dem hier betroffenen Gebiet bekannt. Ein TPU ist ein zumindest im Wesentlichen lineares Polymer, das durch die Polymerisationsreaktion dreier Ausgangskomponenten gebildet wird:
1. ein Diisocyanat,
2. ein kurzkettiges Diol (häufig als "Kettenverlängerer" bezeichnet) der allgemeinen Formel (OH-R-OH), wobei R für einen Kohlenwasserstoff-Rest mit 1 bis 4 C-Atomen steht,
3. ein langkettiges Diol (OH-Z-OH), wobei die Gruppe Z für eine Polymerkette steht, die zu einem so genannten Weichsegment des entstandenen Polyurethans führt. Beispielsweise kann die Gruppe Z eine Polyether- oder Polyesterkette darstellen. Polyetherketten können durch ringöffnende Polymerisation von Alkylenoxiden, wie beispielsweise Ethylenoxid oder Propylenoxid oder durch eine entsprechende Reaktion gesättigter sauerstoffhaltiger Heterozyklen, wie beispielsweise Tetrahydrofuran gebildet werden. Polyesterketten entstehen durch Reaktion zweiwertiger Alkohole mit zweibasischen Carbonsäuren. Eine bevorzugte Polyesterkette besteht aus Polycaprolacton-Polyester.

Bei der Umsetzung dieser drei Komponenten entsteht ein Polyurethan, das abwechselnd Weichsegmente und Hartsegmente enthält. Die Weichsegmente werden dabei durch die Gruppe Z gebildet. Die Hartsegmente entstehen aus dem Diisocyanat und dem kurzkettigen Diol.

Die Polarität der Hartsegmente führt zu einer starken Anziehung zwischen diesen, was wiederum zu einem hohen Aggregations- und Ordnungsgrad in der Festphase des Polymers führt. So entstehen kristalline oder pseudo-kristalline Bereiche, die in der weichen und flexiblen Matrix der Weichsegmente eingebettet sind. Die kristallinen und pseudo-kristallinen Bereiche der Hartsegmente wirken als physikalische Verknüpfung, was dem TPU eine hohe Elastizität verleiht. Die flexiblen Ketten der Weichsegmente tragen zum Dehnungsverhalten des Polymers bei.

Das thermoplastische Polyurethan c1) ist vorzugsweise bei Raumtemperatur (22°C) fest und hat eine Glasübergangstemperatur unterhalb von -20°C, vorzugsweise unterhalb von -25°C. Weiterhin weist das bei Raumtemperatur vorzugsweise feste thermoplastische Polyurethan c1) einen Schmelzbereich oder einen Erweichungsbereich nach Kofler auf, der oberhalb von 100°C, vorzugsweise oberhalb von 115°C beginnt. Geeignete bei Raumtemperatur vorzugsweise feste Polyurethane c1) zeichnen sich weiterhin dadurch aus, dass sie als reine Substanz eine Bruchdehnung von mindestens 300%, vorzugsweise von mindestens 400% aufweisen. Als thermoplastische Polyurethane c1) mit diesen Eigenschaften sind insbesondere solche geeignet, die eine Polycaprolacton-Polyesterkette oder eine Polyesterkette enthalten.

Die gewichtsmittlere Molmasse (Mw) geeigneter Polyurethane c1), wie sie durch Gelpermeationschromatographie bestimmbar ist, liegt vorzugsweise im Bereich von 50000 g/mol bis 120000 g/mol, insbesondere im Bereich von 55000 g/mol bis 90000 g/mol.

Geeignete thermoplastische Polyurethane, die den vorstehenden Kriterien genügen, sind im Handel erhältlich und können anhand dieser Spezifikationen beispielsweise von der Fa. Merquinsa in Spanien oder der Fa. Danquinsa GmbH in Deutschland bezogen werden.

Anstelle oder zusammen mit den reaktiven (vernetzbaren) oder nicht reaktiven (nicht vernetzbaren) thermoplastischen Polyurethanen c1) kann der Klebstoff thermoplastische Isocyanate enthalten. Diese sind weiter vernetzbar und reagieren beispielsweise mit Alkoholen zu thermoplastischen Polyurethanen, die ihrerseits den Kriterien für die Komponente c1) genügen können. Bei diesen thermoplastischen Isocyanaten kann es sich beispielsweise um Isocyanat-terminierte Polyetherpolyole handeln, insbesondere um solche, die eine Molmasse im Bereich zwischen 1000 und 10000 g/mol aufweisen.

Anstelle oder zusammen mit den reaktiven (vernetzbaren) oder nicht reaktiven (nicht vernetzbaren) thermoplastischen Polyurethanen c1) und/oder den thermoplastischen Isocyanaten c2) kann der Klebstoff als Komponente c3) Block-Copolymere mit thermoplastischen Polymerblöcken enthalten. Diese werden vorzugsweise ausgewählt aus solchen, die einen ersten Polymerblock mit einer Glasübergangstemperatur von unterhalb 15°C, insbesondere von unterhalb 0°C, und einen zweiten Polymerblock mit einer Glasübergangstemperatur von oberhalb 25°C, insbesondere von oberhalb 50°C enthalten. Weiterhin sind solche Block-Copolymere geeignet, die ausgewählt sind aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block.

Beispielsweise wird das Block-Copolymer c3) ausgewählt aus Copolymeren mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Malein-säureanhydrid, (Meth)Acrylsäureester- Butylacrylat-(Meth)Acrylsäureester, vorzugsweise Methylmethacrylat-Butylacrylat-Methylmethacrylat

Vorstehend wird die Zusammensetzung dieser Block-Copolymere dadurch definiert, dass für jeden Block die Monomer-Einheit angegeben ist. Dies ist so zu verstehen, dass das Block-Copolymerjeweils Polymerblöcke aus den genannten Monomeren enthält. Dabei können bei den einzelnen Polymerblöcken bis zu 20 mol/% der genannten Monomere durch andere CoMonomere ersetzt werden. Insbesondere gilt dies für Blöcke aus Poly-Methylmethacrylat.

Die vorstehend genannten Block-Copolymere entsprechen denjenigen, die auch im Rahmen der WO 2007/025007 eingesetzt werden können. Nähere Ausführungen hierzu und weitere auch im Rahmen der vorliegenden Erfindung geeignete Block-Copolymere können diesem Dokument von S. 25, Z. 21 bis S. 26, Z. 9 entnommen werden. Dort finden sich auch Querverweise auf Dokumente, in denen die Herstellung solcher Block-Copolymere beschrieben ist.

Zusätzlich zu den vorstehend beschriebenen Komponenten kann der Klebstoff als weitere Komponente
d) Kautschuk-Partikel
enthalten, vorzugsweise solche, die eine Kern-Schale-Struktur aufweisen.

Durch den Einsatz der Komponente d) im Rahmen des erfindungsgemäßen Verfahrens ist es möglich, das Risiko des Auftretens von Microrissen weiter zu reduzieren.

Dabei ist es bevorzugt, dass die Kautschuk-Partikel mit Kern-Schale-Struktur einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen. Besonders geeignete Kautschuk-Partikel mit Kern-Schale-Struktur können einen Kern aus einem Dien-Homopolymer, einem Dien-Copolymer oder einem Polysiloxan-Elastomer und/oder eine Schale aus einem Alkyl(meth)acrylat-Homopolymer oder -Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen.

Als Kern können andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kern-Schale-Partikel so aufgebaut, dass der Kern 50 bis 95 Gew.-% des Kern-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kern-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kern-Schale-Partikel ist im Stand der Technik bekannt, wie beispielsweise in WO 2007/025007 auf Seite 6, Zeilen 16 bis 21 angegeben ist. Kommerzielle Bezugsquellen derartiger Kern-Schale-Partikel werden in diesem Dokument im letzten Absatz der Seite 6 bis zum ersten Absatz der Seite 7 aufgeführt. Auf diese Bezugsquellen wird hiermit verwiesen. Weiterhin wird auf Herstellverfahren für solche Partikel verwiesen, die in dem genannten Dokument von Seite 7, 2. Absatz bis Seite 8, 1. Absatz beschrieben sind. Für nähere Informationen zu geeigneten Kern-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Die selbe Funktion wie die vorstehend genannten Kautschuk-Partikel mit Kern-Schale-Struktur können anorganische Partikel übernehmen, die eine Hülle aus organischen Polymeren aufweisen. Daher ist eine weitere bevorzugte Ausführungsform der vorliegenden Erfindung dadurch gekennzeichnet, dass der Klebstoff als zusätzliche Komponente
e) anorganische Partikel
enthält, die eine Hülle aus organischen Polymeren aufweisen.

In dieser Ausführungsform enthält der Klebstoff anorganische Partikel, die eine Hülle aus organischen Polymeren aufweisen, wobei die organischen Polymere vorzugsweise ausgewählt sind aus Homo- oder Copolymeren von Acrylsäure- und/oder Methacrylsäureester und zu mindestens 30 Gew.-% aus einpolymersiertem Acrylsäure- und/oder Methacrylsäureester bestehen.

Die anorganischen Partikel weisen vor dem Aufbringen der Hülle aus organischen Polymeren vorzugsweise eine mittlere Teilchengröße im Bereich von 1 bis 1000, insbesondere im Bereich von 5 bis 30 nm auf. Bekanntermaßen ist die Teilchengröße durch Lichtstreumethoden sowie elektronenmikroskopisch bestimmbar.

Die Hülle aus organischen Polymeren weist eine geringere Dichte auf als die anorganischen Partikel selbst. Vorzugsweise hat die Hülle aus organischen Polymeren eine solche Dicke, dass das Gewichtsverhältnis des anorganischen Kerns zur Hülle aus organischen Polymeren im Bereich von 2 : 1 bis 1 : 5, vorzugsweise im Bereich von 3 : 2 bis 1 : 3 liegt. Dies ist durch die Wahl der Reaktionsbedingungen beim Aufwachsen der Hülle aus organischen Polymeren auf die anorganischen Partikel steuerbar.

Allgemein können die anorganischen Partikel ausgewählt sein aus Metallen, Oxiden, Hydroxiden, Carbonaten, Sulfaten und Phosphaten. Dabei können auch Mischformen aus Oxiden, Hydroxiden und Carbonaten, wie beispielsweise basische Carbonate oder basische Oxide vorliegen. Wählt man anorganische Partikel aus Metallen, so kommen vorzugsweise Eisen, Cobalt, Nickel oder Legierungen in Betracht, die zumindest 50 Gew.-% aus einem dieser Metalle bestehen. Oxide, Hydroxide oder Mischformen hiervon sind vorzugsweise ausgewählt aus solchen von Silicium, Cer, Cobalt, Chrom, Nickel, Zink, Titan, Eisen, Yttrium, Zirkonium und/oder Aluminium. Auch hiervon sind Mischformen möglich, wie beispielsweise Partikel aus Alumosilikaten oder aus silikatischen Gläsern. Besonders bevorzugt sind Zinkoxid, Aluminiumoxide oder-hydroxide sowie SiO₂ beziehungsweise die als "Kieselsäure" oder angelsächsisch als "silica" bezeichneten Oxidformen des Siliciums. Weiterhin können die anorganischen Partikel aus Carbonaten, wie beispielsweise Calciumcarbonat, oder aus Sulfaten, wie beispielsweise Bariumsulfat, bestehen. Selbstverständlich ist es auch möglich, dass Partikel mit unterschiedlich zusammengesetzten anorganischen Kernen nebeneinander vorliegen.

Zur Herstellung der anorganischen Partikel, die eine Hülle aus organischen Polymeren aufweisen, kann man beispielsweise so verfahren, wie es in der WO 2004/111136 A1 am Beispiel der Belegung von Zinkoxid mit Alkylenethercarbonsäuren beschrieben ist. Gemäß dieser Verfahrensweise suspendiert man die unbehandelten anorganischen Partikel in einem unpolaren oder wenig polaren Lösungsmittel, gibt danach monomere oder präpolymere Bestandteile der Hülle zu, entfernt das Lösungsmittel und startet die Polymerisation, beispielsweise radikalisch oder fotochemisch. Weiterhin kann man analog der in EP 1 469 020 A1 beschriebenen Herstellungsweise verfahren, wobei man als organische Beschichtungskomponente für die Partikel Monomere oder Präpolymere des Hüllmaterials einsetzt.

Weiterhin kann auf Herstellverfahren zurückgegriffen werden, wie sie in der WO 2006/053640 beschrieben sind. Für die vorliegende Erfindung sind dabei anorganische Kerne auszuwählen, wie sie in WO 2006/053640 von Seite 5, Zeile 24, bis Seite 7, Zeile 15, mit ihren Herstellverfahren beschrieben sind. Die Beschichtung dieser Kerne erfolgt analog wie in diesem Dokument von S. 10, Zeile 22, bis S 15, Zeile 7 beschrieben. Der Klebstoff kann entweder nur die genannten Kautschuk-Partikel oder nur die genannten umhüllten anorganischen Partikel oder beide Partikelsorten gleichzeitig enthalten.

Wie weiter oben ausgeführt, ist es insbesondere bei derjenigen Ausführungsform, bei der man die mit Klebstoff beschichteten Magente in Schlitze im Rotor oder Stator einsetzt, bevorzugt, dass der Klebstoff zusätzlich
f) mindestens ein Treibmittel enthält.

Beispiele geeigneter Treibmittel sowie deren bevorzugte Mengenbereiche wurden weiter oben bereits genannt.

Durch einen Zusatz von gut Wärme leitenden Partikeln wie beispielsweise Metallpulver (was Pulver aus Metalllegierungen einschließt) kann die Wärmeleitung in dem Klebstoff und damit sein Aushärtungsverhalten verbessert werden. Daher besteht eine Ausführungsform des Klebstoffs darin, dass er zusätzlich
g) Metallpulver
enthält. Geeignete Metallpulver können ausgewählt werden aus Pulvern aus Eisen (insbesondere Stahl), Aluminium, Zink, Kupfer oder Legierungen, die mindestens 50 Gew.-% eines dieser Elemente enthalten. Vorzugsweise setzt man Metallpulver ein, bei dem 90 Gew.-% der Partikel eine durch Siebanalyse bestimmbare Teilchengröße im Bereich von 10 bis 100 µm aufweisen.

In der Regel enthalten die erfindungsgemäß verwendbaren Klebstoffe weiterhin an sich bekannte Füllstoffe wie zum Beispiel die diversen gemahlenen oder gefällten Kreiden, Ruß, Calcium-Magnesiumcarbonate, Talkum, Schwerspat, Kieselsäuren oder Silica sowie insbesondere silikatische Füllstoffe vom Typ des Aluminium-Magnesium-Calcium-Silicats, z. B. Wollastonit, Chlorit.

Zur Gewichtsreduzierung kann der Klebstoff zusätzlich zu den vorgenannten "normalen" Füllstoffen sogenannte Leichtfüllstoffe enthalten. Diese können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Poly-styrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in dem ausgehärteten Klebstoff eine hohe Druckfestigkeit gewährleisten.

In einer möglichen Ausführungsform enthält der Klebstoff zusätzlich Fasern, beispielsweise auf der Basis von Aramidfasern, Kohlenstoff-Fasern, Metallfasern - zum Beispiel aus Aluminium -, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Weiterhin können die erfindungsgemäßen härtbaren Massen gängige weitere Hilfs- und Zusatzmittel wie z. B. Weichmacher, Rheologie-Hilfsmittel, Netzmittel, Haftvermittler, Alterungsschutzmittel, Stabilisatoren und/oder Farbpigmente enthalten.

Vorzugsweise enthält der Klebstoff die einzelnen Komponenten in den nachstehenden Mengenbereichen. Die Mengenangaben verstehen sich als Gewichts-Prozent in Bezug auf den kompletten Klebstoff, wobei die Mengen so zu wählen sind, dass sich insgesamt 100 Gew-% ergeben:
a) Reaktives Epoxid-Präpolymer: mindestens 20, vorzugsweise mindestens 30 Gew.-%, und bis zu 80, vorzugsweise bis zu 70 und insbesondere bis zu 60 Gew.-%. Dabei ist entweder der gesamte Anteil an Epoxid-Präpolymer bei 22 °C fest, oder man verwendet eine Mischung von reaktiven Epoxid-Präpolymeren, wobei ein Teil der Epoxid-Präpolymer bei 22 °C fest und ein anderer Teil der Epoxid-Präpolymere bei 22 °C flüssig oder pastös ist. (Pastös bedeutet, dass sich die Masse zu einem Film verstreichen lässt.) Durch das Mischungsverhältnis von bei 22 °C festen und flüssigen Epoxid-Präpolymeren kann man einstellen, ob der Klebstoff bei 22 °C klebrig ist oder nicht: Je weniger flüssiges Epoxid-Präpolymer eingesetzt wird, desto geringer ist die Klebrigkeit. Beispielsweise kann das Mengenverhältnis zwischen bei 22 °C festen und bei 22 °C flüssigen oder pastösen Epoxid-Präpolymeren im Bereich von 10 : 1 bis 1 : 10 liegen.
b) Latenter Härter für Epoxide: mindestens 1, vorzugsweise mindestens 2 Gew.-%, und bis zu 10, vorzugsweise bis zu 8 Gew.-%. Dabei kann zusätzlich ein Härtungsbeschleuniger vorgesehen werden. Falls dies erwünscht ist, kann dieser in einer Menge im Bereich von mindestens 0,1, vorzugsweise mindestens 0,5 Gew.-%, und bis zu 6 Gew.-%, vorzugsweise bis zu 5 und insbesondere bis zu 3 Gew.-% vorliegen.
c) Ein oder mehrere Elastomere, ausgewählt aus: c1) thermoplastischen Polyurethanen, c2) thermoplastischen Isocyanaten, c3) Block-Copolymeren mit thermoplastischen Polymerblöcken: insgesamt mindestens 1, vorzugsweise mindestens 5 und insbesondere mindestens 10 Gew.-%, und bis zu 70, vorzugsweise bis zu 50 Gew.-%. Dabei können nur eine der Komponenten c1) bis c3) oder zwei dieser Komponenten oder alle drei Komponenten vorliegen. Besonders bevorzugt ist mindestens eine der Komponenten c1) und c2), besonders bevorzugt die Komponente c1) vorhanden. Zusammen mit dieser wird vorzugsweise zusätzlich die Komponente c3) verwendet. In diesem Fall liegt die Komponente c1) und/oder c2) insgesamt zu mindestens 1, vorzugsweise mindestens 5 Gew.-%, und bis zu 35, vorzugsweise bis zu 25 Gew.-% vor und die Komponente c3) zu mindestens 1 Gew.-% und bis zu 35 Gew.-%, vorzugsweise bis zu 25 Gew.-%. Zusätzlich zu diesen Elastomeren kann der Klebstoff weitere Polymere und Copolymere mit Elastomereigenschaften oder Kautschuk-Partikel d), vorzugsweise mit Kern-Schal Struktur, enthalten, beispielsweise Copolymere aus Dienen (wie Butadien, Isopren) und (Meth)acrylsäure oder deren Ester. Diese können in Mengenanteilen (bezogen auf den gesamte Klebstoff) von bis zu 20 Gew.-% und insbesondere bis zu 10 Gew.-%, und vorzugsweise von mehr als 1 Gew.-%, insbesondere von mehr als 4 Gew.-% vorliegen.
e) anorganische Partikel, die eine Schale aus organischen Polymeren aufweisen: nicht zwingend erforderlich. Falls vorhanden: vorzugsweise insgesamt mindestens 5, vorzugsweise mindestens 10 Gew.-%, und bis zu 45, vorzugsweise bis zu 35 und insbesondere bis zu 25 Gew.-%. Mengen zwischen 0 und 5 Gew.-% sind ebenfalls möglich.
f) Treibmittel: nicht erforderlich, wenn der Klebstoff nicht thermisch expandierbar sein soll. Wird ein thermisch expandierbarer Klebstoff gewünscht, hängt der erforderliche Anteil an Treibmittel vom angestrebten Expansionsgrad ab und kann empirisch ermittelt werden. Als Anhaltspunkt kann ein Treibmittel-Gehalt im Bereich von 0,2 bis 1,5 Gew.-% dienen. Es sind jedoch auch Treibmittel-Gehalte bis zu 5 und bis zu 10 Gew.-% möglich.
g) Metallpulver: nicht zwingend erforderlich. Falls vorhanden: vorzugsweise mindestens 0,1, insbesondere mindestens 5 Gew.-%, und bis zu 40, vorzugsweise bis zu 25 Gew.-%.

Weitere Hilfsstoffe wie Füllstoffe und Farbpigmente: null bis insgesamt 60, vorzugsweise bis insgesamt 40 Gew.-%, insbesondere bis insgesamt 20 Gew.-%, und vorzugsweise mindestens 5, insbesondere mindestens 10 Gew.-%

Der vorstehend beschriebene Klebstoff kann je nach Anwendungszweck so ausgestaltet sein, dass er bei Raumtemperatur (22 °C) klebrig ist oder nicht. Sofern ein bei 15 - 50 °C haftklebriger Klebstoff erwünscht ist, kann dies in der Regel durch das Verhältnis von flüssigen zu festen Polymerkomponenten erreicht werden. Durch das Mischungsverhältnis von bei 22 °C festen und flüssigen Epoxid-Präpolymeren kann man einstellen, ob der Klebstoff bei 22 °C klebrig ist oder nicht: Je weniger flüssiges Epoxid-Präpolymer eingesetzt wird, desto geringer ist die Klebrigkeit. Beispielsweise kann das Mengenverhältnis zwischen bei 22 °C festen und bei 22 °C flüssigen oder pastösen Epoxid-Präpolymeren im Bereich von 10 : 1 bis 1 : 10 liegen.

Alternativ oder ergänzend kann man dem Klebstoff klebrig machende Harze zusetzen, wie beispielsweise aromatische, aliphatische oder cycloaliphatische Kohlenwasserstoff-Harze sowie modifizierte oder hydrierte Naturharze. Geeignete Harze sind zum Beispiel Terpen-Harze, wie Terpolymere oder Copolymere des Terpens, modifizierte Naturharze wie Harzsäuren aus Balsamharz, Tallharz oder Wurzelharz, ggf. auch Hydroabietylalkohol und seine Ester, Acrylsäure-Copolymerisate, wie Styrol-Acrylsäure-Copolymere oder Copolymerisate aus Ethylen, Acrylatestern und Maleinsäureanhydrid, oder Harze auf Basis funktioneller Kohlenwasserstoffharze. Als einsetzbares klebrigmachendes Harz sind auch niedermolekulare Umsetzungsprodukte geeignet, die aus Ethylen/Propylen-α-Olefin- Polymeren bestehen. Das Molekulargewicht solcher Polymere beträgt meist unterhalb von 2000 g/mol.

In einem weiteren Aspekt umfasst die vorliegende Erfindung montagefertig vorbeschichtete Magnete, die zum Auf- beziehungsweise Einkleben nach dem erfindungsgemäßen Verfahren mit dem speziellen Klebstoff vorbeschichtet sind. Für die bevorzugten Zusammensetzungen des Klebstoffs gelten die vorstehenden Ausführungen entspechend.

### Beispiele

Die Rohstoffe 1 bis 7 gemäß nachstehender Tabelle wurden bei einer Temperatur von 120°C in einem Planetenmischer miteinander vermischt. Die weiteren Prozessschritte erfolgen bei einer Temperatur von max 60°C.
Mengenangaben in Gew.-%

| | | Beispiel 1 | Beispiel 2 | Beispiel 3 |
|---|---|---|---|---|
| 1 | Bei 22 °C festes Epoxidharz (Epon™ 1001) | 28,80% | 28,90% | 28,8% |
| 2 | Bei 22 °C flüssiges Epoxidharz | 21,6% | 21,7% | -- |
| 3a | Butadien-Acrylic-Copolymer | 7,2% | 7,2% | -- |
| 3b | Thermoplastisches Polyurethan (Pearlcoat™ 125K) | 14,40% | 14,40% | 14,4% |
| 4 | Kautschuk-Partikel (Kaneka Ace™ MX-125) | -- | -- | 28,8% |
| 5 | CaCO₃ | 10,50% | 10,60% | 10,6% |
| 6 | Aluminium Pulver | 9,60% | 0,00% | 9,5% |
| 7 | Beschichtetes Aluminium Pulver | 0,00% | 9,60% | -- |
| 8 | Dicyandiamid | 4,00% | 4,00% | 4,0% |
| 9 | Beschleuniger (Ajicure™ AH30) | 1,90% | 1,90% | 1,9% |
| 10 | Expandierbare Mikrohohlkugeln | 0,80% | 0,50% | 0,8% |
| 11 | Pyrogene Kieselsäure | 1,00% | 1,00% | 1,0% |
| 12 | Farbpigment (Ruß) | 0,20% | 0,20% | 0,2% |

Diese Mischung kann auf die Magnete aufextrudiert oder kaschiert werden. Oder die Magnete werden mit dem Klebstoff umspritzt.

### Schäumverhalten

| | Beispiel 1 | Beispiel 2 | Beispiel 3 |
|---|---|---|---|
| Härtungsbedingungen: | 150°C - 37 Minuten | | |
| Dichte [g/cm³] (vor Härtung) | 1,26 | 1,25 | 1,26 |
| Expansionsrate [%] (offener Raum) | 60% | 40% | 60,5% |
| Dichte nach Härtung [g/cm³] | 0,79 | 0,89 | 0,79 |

### Prüfergebnisse:

| Lap Shear Strength (LSS) - 10mm Überlappung - Versuchsgeschwindigkeit 20mm/min | | Beispiel 1 | Beispiel 2 | Beispiel 3 |
|---|---|---|---|---|
| I. | Härtung: | 180°C - 10 Minuten | | |
| Substrat: | Kaltgewalzter Stahl (CRS) DC 05 (1,5mm) | | | |
| | LSS (MPa) | 22,6 | 26,0 | 22,6 |
| | | | | |
| Substrat: | Aluminium AC170 (0,8mm) | | | |
| | LSS (MPa) | 17,1 | 18,9 | 17,1 |
| | | | | |
| II. | Härtung: | 150°C - 5 Minuten | | |
| Substrat: | CRS DC 05 (1,5mm) | | | |
| | LSS (MPa) | 8,2 | 9,9 | -- |

| | | | | |
|---|---|---|---|---|
| Klebefläche 25*10mm und Klebschichtdicke 0,2mm | | | | |

In allen Fällen wurde 100 % Kohäsionsbruch festgestellt.

## Patentansprüche

1. Verfahren zum Auf- oder Einkleben eines Magneten auf die Oberfläche oder in einen Schlitz eines Rotors oder Stators eines Elektromotors oder eines Generators, wobei man
i) die zu verklebende Fläche oder Flächen des Magneten mit einem Klebstoff vorbeschichtet, der bei 22 °C nicht flüssig ist und der nicht ohne einen Aktivierungsschritt aushärtet,
ii) gegebenenfalls den mit Klebstoff beschichteten Magneten zwischenlagert und/oder vom Ort der Beschichtung zum Ort des Auf- oder Einklebens transportiert,
iii) den Magneten mit der mit Klebstoff beschichteten Fläche auf die Oberfläche des Rotors oder Stators auflegt und fixiert oder den Magneten so in einen Schlitz des Rotors oder Stators einsetzt, dass mindestens eine mit Klebstoff beschichtete Fläche einer Innenwand des Schlitzes gegenüber liegt, und
iv) den Klebstoff durch Erwärmen oder durch energiereiche Strahlung aktiviert, so dass er aushärtet,
**dadurch gekennzeichnet, dass** man einen Klebstoff verwendet, enthaltend
a) mindestens ein reaktives Epoxid-Präpolymer,
b) mindestens einen latenten Härter für Epoxide sowie
c) ein oder mehrere Elastomere ausgewählt aus
A) Block-Copolymeren mit thermoplastischen Polymerblöcken ausgewählt aus solchen Block-Copolymeren, die einen ersten Polymerblock mit einer Glasübergangstemperatur von unterhalb 15°C und einen zweiten Polymerblock mit einer Glasübergangstemperatur von oberhalb 25°C enthalten, und
B) Block-Copolymeren und thermoplastischen Polyurethanen.

2. Verfahren zum Auf- oder Einkleben eines Magneten auf die Oberfläche oder in einen Schlitz eines Rotors oder Stators eines Elektromotors oder eines Generators, wobei man
i) die zu verklebende Fläche oder Flächen des Rotors oder Stators mit einem Klebstoff vorbeschichtet, der bei 22 °C nicht flüssig ist und der nicht ohne einen Aktivierungsschritt aushärtet,
ii) gegebenenfalls den mit Klebstoff beschichteten Rotor oder Stator zwischenlagert und/oder vom Ort der Beschichtung zum Ort des Auf- oder Einklebens transportiert,
iii) den Magneten mit der mit Klebstoff beschichteten Fläche des Rotors oder Stators in Kontakt bringt und
iv) den Klebstoff durch Erwärmen oder durch energiereiche Strahlung aktiviert, so dass er aushärtet,
**dadurch gekennzeichnet, dass** man einen Klebstoff verwendet, enthaltend
a) mindestens ein reaktives Epoxid-Präpolymer,
b) mindestens einen latenten Härter für Epoxide sowie
c) ein oder mehrere Elastomere ausgewählt aus
A) Block-Copolymeren mit thermoplastischen Polymerblöcken ausgewählt aus solchen Block-Copolymeren, die einen ersten Polymerblock mit einer Glasübergangstemperatur von unterhalb 15°C und einen zweiten Polymerblock mit einer Glasübergangstemperatur von oberhalb 25°C enthalten, und
B) Block-Copolymeren und thermoplastischen Polyurethanen.

3. Verfahren nach Anspruch 1 oder 2, **dadurch gekennzeichnet, dass** man auf den Magneten oder den Rotor oder Stator den Klebstoff mit einer Schichtdicke im Bereich von 0,1 bis 5 mm aufbringt.

4. Verfahren nach einem oder mehreren der Ansprüche 1 bis 3 , **dadurch gekennzeichnet, dass** man den Magneten auf die Oberfläche des Rotors oder Stators aufklebt und dass man zum Vorbeschichten einen Klebstoff verwendet, der bei einer Temperatur im Bereich von 15 bis 50 °C haftklebrig ist, so dass der Magnet auf der Oberfläche des Rotors oder Stators haftet, bevor der Klebstoff zum Aushärten aktiviert wird.

5. Verfahren nach einem oder mehreren der Ansprüche 1 bis 3, **dadurch gekennzeichnet, dass** man den Magneten in einen Schlitz des Rotors oder Stators einklebt und dass man zum Vorbeschichten einen Klebstoff verwendet, der bei einer Temperatur im Bereich von 15 bis 50 °C nicht haftklebrig ist.

6. Verfahren nach einem oder mehreren der Ansprüche 1 bis 5, **dadurch gekennzeichnet, dass** man einen Klebstoff verwendet, der sein Volumen nach dem Aktivierungsschritt um mindestens 1 % vergrößert.

7. Verfahren nach einem oder mehreren der Ansprüche 1 bis 6, **dadurch gekennzeichnet, dass** man einen durch Erwärmen auf eine Temperatur im Bereich von 60 bis 200 °C aktivierbaren Klebstoff verwendet und den Klebstoff nach dem Schritt iii) auf eine Temperatur im Bereich von 60 bis 200 °C erwärmt, so dass er aushärtet.

8. Verfahren nach einem der Ansprüche 1 bis 7, **dadurch gekennzeichnet, dass** als Komponente a) mindestens teilweise ein bei 22 °C festes Epoxidharz mit reaktiven EpoxidGruppen vorliegt.

9. Verfahren nach einem oder mehreren der Ansprüche 6 bis 8, **dadurch gekennzeichnet, dass** der Klebstoff zusätzlich mindestens ein Treibmittel enthält.

10. Magnet, der mit einem Klebstoff vorbeschichtet ist, der bei 22 °C nicht flüssig ist und der nicht ohne einen Aktivierungsschritt aushärtet, wobei der Magnet für die Schritte iii) und iv) im Verfahren nach einem oder mehreren der Ansprüche 1 oder 3 bis 9 verwendet werden kann,
**dadurch gekennzeichnet, dass** der Klebstoff
a) mindestens ein reaktives Epoxid-Präpolymer,
b) mindestens einen latenten Härter für Epoxide sowie
c) ein oder mehrere Elastomere ausgewählt aus
A) Block-Copolymeren mit thermoplastischen Polymerblöcken ausgewählt aus solchen Block-Copolymeren, die einen ersten Polymerblock mit einer Glasübergangstemperatur von unterhalb 15°C und einen zweiten Polymerblock mit einer Glasübergangstemperatur von oberhalb 25°C enthalten, und
B) Block-Copolymeren und thermoplastischen Polyurethanen,
enthält.

## Claims

1. Method for gluing a magnet to the surface of, or into a slot in, a rotor or stator of an electric motor or a generator, wherein
i) the area or areas of the magnet to be glued is/are precoated with an adhesive which is not fluid at 22°C and which does not cure without an activation step,
ii) the magnet which is coated with adhesive is optionally temporarily stored and/or transported from the location where the coating is carried out to the location where the gluing on or gluing in takes place,
iii) the magnet is placed with the area that is coated with adhesive on the surface of the rotor or stator and fixed, or the magnet is inserted into a slot in the rotor or stator in such a way that at least one area which is coated with adhesive is situated opposite from an inner wall of the slot, and
iv) the adhesive is activated by heating or by high-energy radiation so that the adhesive cures,
**characterized in that** an adhesive is used which contains
a) at least one reactive epoxy prepolymer,
b) at least one latent hardener for epoxides, and
c) one or more elastomers selected from
A) block copolymers having thermoplastic polymer blocks selected from those block copolymers which contain a first polymer block having a glass transition temperature of below 15°C and a second polymer block having a glass transition temperature of above 25°C, and
B) block copolymers and thermoplastic polyurethanes.

2. Method for gluing a magnet to the surface of, or into a slot in, a rotor or stator of an electric motor or a generator, wherein
i) the area or areas of the rotor or stator to be glued is/are precoated with an adhesive which is not fluid at 22°C and which does not cure without an activation step,
ii) the rotor or stator which is coated with adhesive is optionally temporarily stored and/or transported from the location where the coating is carried out to the location where the gluing on or gluing in takes place,
iii) the magnet is brought into contact with the area of the rotor or stator that is coated with adhesive, and
iv) the adhesive is activated by heating or by high-energy radiation so that the adhesive cures,
**characterized in that** an adhesive is used which contains
a) at least one reactive epoxy prepolymer,
b) at least one latent hardener for epoxides, and
c) one or more elastomers selected from
A) block copolymers having thermoplastic polymer blocks selected from those block copolymers which contain a first polymer block having a glass transition temperature of below 15°C and a second polymer block having a glass transition temperature of above 25°C, and
B) block copolymers and thermoplastic polyurethanes.

3. Method according to Claim 1 or 2, **characterized in that** the adhesive is applied to the magnet or to the rotor or stator with a layer thickness in the range of 0.1 to 5 mm.

4. Method according to one or more of Claims 1 through 3, **characterized in that** the magnet is glued to the surface of the rotor or stator, and that for the precoating an adhesive is used which is tackifying at a temperature in the range of 15 to 50°C, so that the magnet adheres to the surface of the rotor or stator before the adhesive is activated for the curing.

5. Method according to one or more of Claims 1 through 3, **characterized in that** the magnet is glued into a slot in the rotor or stator, and that for the precoating an adhesive is used which is non-tackifying at a temperature in the range of 15 to 50°C.

6. Method according to one or more of Claims 1 through 5, **characterized in that** an adhesive is used whose volume increases by at least 1% after the activation step.

7. Method according to one or more of Claims 1 through 6, **characterized in that** an adhesive is used which is activatable by heating to a temperature in the range of 60 to 200°C, and after step iii) the adhesive is heated to a temperature in the range of 60 to 200°C, so that the adhesive cures.

8. Method according to one of Claims 1 through 7, **characterized in that** an epoxy resin which is solid at 22°C and which has reactive epoxy groups is present, at least in part, as component a).

9. Method according to one or more of Claims 6 through 8, **characterized in that** the adhesive additionally contains at least one expanding agent.

10. Magnet which is precoated with an adhesive which is not fluid at 22°C and which does not cure without an activation step, wherein the magnet may be used for steps iii) and iv) in the method according to one or more of Claims 1 or 3 through 9,
**characterized in that** the adhesive contains
a) at least one reactive epoxy prepolymer,
b) at least one latent hardener for epoxides, and
c) one or more elastomers selected from
A) block copolymers having thermoplastic polymer blocks selected from those block copolymers which contain a first polymer block having a glass transition temperature of below 15°C and a second polymer block having a glass transition temperature of above 25°C, and
B) block copolymers and thermoplastic polyurethanes.

## Revendications

1. Procédé de collage d'un aimant sur la surface ou dans une fente d'un rotor ou d'un stator d'un moteur électrique ou d'un générateur, dans lequel
i) on revêt tout d'abord la surface ou les surfaces de l'aimant à coller d'un adhésif qui n'est pas liquide à 22°C et qui ne durcit pas sans une étape d'activation,
ii) le cas échéant, on stocke provisoirement l'aimant revêtu d'adhésif et/ou on le transporte du lieu de revêtement au lieu de collage,
iii) on place et on fixe l'aimant, dont la surface est revêtue d'adhésif, sur la surface du rotor ou du stator ou on insère l'aimant dans une fente du rotor ou du stator de telle sorte qu'au moins une surface revêtue d'adhésif est placée en face d'une paroi intérieure de la fente, et
iv) on active l'adhésif par chauffage ou par rayonnement énergétique pour qu'il durcisse, **caractérisé en ce que** l'on utilise un adhésif contenant
a) au moins un prépolymère réactif à base d'époxyde,
b) au moins un agent de durcissement latent pour époxydes et
c) un ou plusieurs élastomères sélectionnés parmi
A) les copolymères blocs comportant des blocs de polymères thermoplastiques sélectionnés parmi les copolymères blocs qui contiennent un premier bloc de polymère dont la température de transition vitreuse est inférieure à 15°C et un second bloc de polymère dont la température de transition vitreuse est supérieure à 25°C, et
B) les copolymères blocs, et les polyuréthanes thermoplastiques.

2. Procédé de collage d'un aimant sur la surface ou dans une fente d'un rotor ou d'un stator d'un moteur électrique ou d'un générateur, dans lequel
i) on revêt tout d'abord la surface ou les surfaces à coller d'un rotor ou d'un stator d'un adhésif qui n'est pas liquide à 22°C et qui ne durcit pas sans une étape d'activation,
ii) le cas échéant, on stocke provisoirement le rotor ou le stator revêtu de l'adhésif et/ou on le transporte du lieu de revêtement sur le lieu de collage,
iii) on met l'aimant en contact avec la surface du rotor ou du stator qui est revêtue d'adhésif et
iv) on active l'adhésif par chauffage ou par rayonnement énergétique pour qu'il durcisse, **caractérisé en ce que** l'on utilise un adhésif contenant
a) au moins un prépolymère réactif à base d'époxyde,
b) au moins un agent de durcissement latent pour époxydes et
c) un ou plusieurs élastomères sélectionnés parmi
A) les copolymères blocs comportant des blocs de polymère thermoplastique sélectionnés parmi les copolymères blocs qui contiennent un premier bloc de polymère dont la température de transition vitreuse est inférieure à 15°C et un second bloc de polymère dont la température de transition vitreuse est supérieure à 25°C, et
B) les copolymères blocs et les polyuréthanes thermoplastiques.

3. Procédé selon la revendication 1 ou 2, **caractérisé en ce que** l'on applique l'adhésif sur l'aimant ou le rotor ou le stator avec une épaisseur de couche dans la gamme de 0,1 à 5 mm.

4. Procédé selon l'une ou plusieurs des revendications 1 à 3, **caractérisé en ce que** l'on colle l'aimant sur la surface du rotor ou du stator, et **en ce que** l'on utilise pour le pré-revêtement un adhésif qui est adhérant à une température dans la gamme de 15 à 50°C de telle sorte que l'aimant adhère à la surface du rotor ou du stator avant d'activer l'adhésif pour qu'il durcisse.

5. Procédé selon l'une ou plusieurs des revendications 1 à 3, **caractérisé en ce que** l'on colle l'aimant dans une fente du rotor ou du stator et **en ce que** l'on utilise pour le pré-revêtement un adhésif qui n'est pas adhérant à une température dans la gamme de 15 à 50°C

6. Procédé selon l'une ou plusieurs des revendications 1 à 5, **caractérisé en ce que** l'on utilise un adhésif dont le volume augmente d'au moins 1% après l'étape d'activation.

7. Procédé selon l'une ou plusieurs des revendications 1 à 6, **caractérisé en ce que** l'on utilise un adhésif activable par chauffage à une température dans la gamme de 60 à 200°C et **en ce que** l'on chauffe l'adhésif après l'étape iii) à une température dans la gamme de 60 à 200°C pour qu'il durcisse.

8. Procédé selon l'une quelconque des revendications 1 à 7, **caractérisé en ce que** le composant a) utilisé est au moins partiellement une résine d'époxyde solide à 22°C comportant des groupes époxydes réactifs.

9. Procédé selon l'une ou plusieurs des revendications 6 à 8, **caractérisé en ce que** l'adhésif contient en outre au moins un agent moussant.

10. Aimant qui est préalablement revêtu d'un adhésif qui n'est pas liquide à 22°C et qui ne durcit pas sans une étape d'activation, l'aimant pouvant être utilisé dans les étapes iii) et iv) du procédé selon l'une ou plusieurs des revendications 1 ou 3 à 9,
**caractérisé en ce que** l'adhésif contient
a) au moins un prépolymère réactif à base d'époxyde,
b) au moins un agent de durcissement latent pour époxydes et
c) un ou plusieurs élastomères sélectionnés parmi
A) les copolymères blocs comportant des blocs de polymères thermoplastiques sélectionnés parmi les copolymères blocs qui contiennent un premier bloc de polymère dont la température de transition vitreuse est inférieure à 15°C et un second bloc de polymère dont la température de transition vitreuse est supérieure à 25°C, et
B) les copolymères blocs, et les polyuréthanes thermoplastiques.
